# EUROPEAN PATENT SPECIFICATION

(11) **EP 2 173 180 B1**
(45) Date of publication and mention of the grant of the patent: **21.08.2013**
(21) Application number: 08761098.6
(22) Date of filing: 17.06.2008
(51) Int. Cl.: A23B 4/12, A23L 1/01, A23L 3/3499, A23L 3/3508

(54) **A PROCESS FOR INCREASING THE FOOD SAFETY OF COOKED MEAT PRODUCTS**
VERFAHREN ZUR VERBESSERUNG DER ERNÄHRUNGSSICHERHEIT VON GEGARTEN FLEISCHPRODUKTEN
PROCÉDÉ POUR AUGMENTER L'INNOCUITÉ ALIMENTAIRE DE PRODUITS CARNÉS CUITS

(30) Priority: 18.06.2007 EP 07110455
(43) Date of publication of application: 14.04.2010
(73) Proprietor: Purac Biochem N.V., 4206 AC Gorinchem (NL)
(72) Inventor: BONTENBAL, Elize Willem, NL-6701 CE Wageningen (NL)
(74) Representative: Hesselink, Dinah Elisabeth
(86) International application number: PCT/EP2008/057603
(87) International publication number: WO 2008/155323

(56) References cited:
- EP-A- 0 190 028
- EP-A- 0 687 417
- WO-A-91/02465
- WO-A-2004/056203
- US-A- 4 931 297
- US-A1- 2004 115 315
- WATINE P.: "Glucono-delta-lactone functional attributes and applications" INT. FOOD INGREDIENTS, vol. 3, 1995, pages 39-41, XP009091863
- DELAQUIS P ET AL: "Effect of acidification with encapsulated lactate on microbiological, textural and sensory properties of cooked, comminuted fish loaves" FSTA, 1994, XP002275161

## Description

The present invention pertains to a process for manufacturing a meat product, in particular a cooked meat product with an increased shelf-life stability and an increased resistance against the growth of bacteria, in particular *Listeria monocytogenes, Clostridia*, and spoilage bacteria such as *Lactobacilli*. The invention also pertains to a composition useful in such a process, to the use of certain materials in such a process, and to the meat products obtainable thereby.

The present invention makes use of a latent acid, such as an encapsulated acid. The use of encapsulated acids in the preservation of meat products is known in the art.

EP 687 417 describes a process for inhibiting bacterial growth, in particular the growth of *Listeria monocytoyenes*, in cooked meat products wherein acetic acid encapsulated in an edible lipid is added to the meat product before cooking.

P. Watine (Glucono-delta-lactone functional attributes and applications, Int. Food Ingredients, Vol. 30, 1995, pages 39-41) describes the use of glucono-delta-lactone in, among others, meat products as food preservative. The method of addition of the acidulant is not described.

WO 91/02465 describes a method for inhibiting the growth of pathogenic bacteria in refrigerated foods utilising a hydrolysis mixture of aldonic acid and its lactones, or a precursor thereof.

EP190028 describes a method for thermally processing seafood in the presence of a mixture of an acid and its lactones.

US 4931297 describes a method for sterilization and preservation of food utilizing a blend of food acidulants, in particular a blend of glucono-delta-lactone and adipic acid.

WO 2004/056203 describes controlled acidification of food products using lactic or glycolic acid. Acidification is intended to protect the food product from harmful microbiological cultures and provide foods with a certain texture.

US 2004/115315 describes encapsulated lactic acid, and its use, into al., in meat products.

The abstract of P. Delaquis et al. "Effect of acidification with encapsulated lactate on microbiological, textural and sensory properties of cooked comminuted fish loaves, Journal of Aquatic Food Product Technology, FSTA, 1994, XP002275161) describes the addition of encapsulated lactic acid with a melting point of 60°C to pieces of fish.

The addition of acids to meat products is associated witch a number of disadvantages. In the first place, the addition of an acidic compound may detrimentally affect the taste of the meat, its structure, yield, various other properties. This means that a balance needs to be found between the amount and type of acid that can be added without detrimentally affecting the taste of the meat and its other properties, and the microbiological resistance that can be obtained.

There is need for a process for manufacturing a cockled meat product with increased resistance against the growth of bacteria, in particular *Listeria monocytogenes,* which does not suffer from the above disadvantages.

This problem is solved according to the invention by the provision of a process for manufacturing a cooked meat product comprising combining an uncooked meat product with an organic acid salt and a latent acid, followed by cooking the meat product, the latent acid being a compound which does not show acidic properties when it is added to the uncooked meat product, but which is converted to a carboxylic acid with at least 3 carbon atoms under the conditions prevailing during the cooking of the meat product, the organic acid salt being selected from lactate salts, acetate salts, and combinations thereof.

It has been found that the combination of an acid salt selected from lactate salts, acetate salts, and combinations thereof and the specified latent acid enables the manufacture of a cooked meat product which shows a high resistance against the growth of pathogenic bacteria, in particular *Listeria monocytogenes,* without detrimentally affecting the taste and other properties of the product. An increased resistance against other bacteria such as *Clostridia* and spoilage bacteria such as *Lactobacilli* is obtained at the same time.

As indicated above, in the present invention a latent acid is used, which is a compound which does not show acidic properties when it is added to the uncooked meat product, but which is converted to a carboxylic acid with at least 3 carbon atoms under the conditions prevailing during the cooking of the meat product.

In practice this means that the latent acid is converted to an active acid at a temperature of at least 45°C, in particular a temperature of 50-100°C, more in particular a temperature of 55-95°C.

Suitable latent acids include acid-comprising particles coated with a layer of a solid material which melts or otherwise disintegrates under the conditions prevailing during cooking of the meat.

The acid is a carboxylic acid with at least 3 carbon atoms which is suitable for use in foods. The maximum number of carbon atoms in the acid is not critical to the present invention, and is generally below 15. Examples of suitable acids include propionic acid, citric acid, ascorbic acid, adipic acid, fumaric acid, lactic acid, malic acid, tartaric acid, gluconic acid, glucono-delta-lactone, and lactide. For the latter two compounds it is noted that, as will be discussed in more detail below, they are latent acids in themselves. Therefore, while it is possible to provide these acids in coated form, they can also be used in uncoated form.

The acid used must not impart, to the meat product a taste which is incompatible with the other components of the product at the desired pH level. Glucono-delta-lactone, lactide, lactic acid, and citric acid have been found to be particularly well suited for use in the process according to the invention. Where the acid is normally liquid at room temperature it may be adsorbed onto a solid particulate carrier. In one embodiment, lactic acid adsorbed on a carrier is used, e.g., lactic acid adsorbed on a calcium lactate carrier. This material is commercially available as Purac Powder from Purac Biochem.

Suitable coating materials include but are not limited to hydrogenated oils, e.g., shortenings such as hydrogenated soy bean oil, partially hydrogenated palm oil, edible petroleum wax, tallow, edible vegetable wax and hydrogenated lards. Non-hydrogenated vegetable oils may also be used.

Coated acids suitable for use in the present invention are known in the art and require no further description here.

In one embodiment of the present invention, the latent acid is an encapsulated crystalline lactic acid, more specifically an encapsulated crystalline lactic acid as described in WO2004/012534 to Purac Biochem. While this reference describes various embodiments, for use in the present invention those embodiments should be selected which meet the requirements of the present invention as regards the properties of the latent acid.

Examples of commercially available latent acids suitable for use in accordance with the invention include encapsulated citric acid sold under the trade designation "DURKOTE® CITRIC ACID 150-85" by Van Den Bergh, Food Ingredients Group (citric acid encapsulated with partially-hydrogenated soybean oil--melting point 152-158°F.) and encapsulated citric acid sold under the trade designation "CAP-SHURE® C-135-72" by Balchem Corporation (citric acid encapsulated with partially hydrogenated palm oil - melting point 136-144°F).

Suitable latent. acids also include compounds which, while not acidic at room temperature, convert into acids under conditions prevailing during cooking of the meat product. Examples of these compounds include dioxanes such as glucono-delta-lactone, and lactic acid oligomers. Within the context of the present invention lactic acid oligomers comprise 2-10 lactic acid monomers bonded together via an ester bond. In one embodiment, the lactic acid source is a lactic acid oligomer of 2-5 lactic acid molecules. In a further embodiment the lactic acid source is a lactic acid oligomer of 2 lactic acid molecules which is straight or cyclic. Cyclic lactic acid oligomers of two lactic acid molecules are indicated in the art as lactides.

The latent acid is added in an amount which is sufficient to decrease the pH of the meat product after cooking with a value of at least 0.1 pH unit, compared to the pH of the same meat product after cooking but without addition of the acid. Where appropriate, the pH of the meat product after cooking is decreased with a value of at least 0.2 pH units. The pH of the meat product after cooking is generally in the range of 5.7 to 6.5, more an particular in the range of 5.8 to 6.2.

The acid is generally added in an amount of 0.01-5 wt.%, calculated as acid on the weight of the final meat product, preferably in an amount of 0.01-3 wt.%, more preferably in an amount of 0.01-2 wit.%, in particular in an amount of 0.01-1 wt.%. The exact amount of acid to be added will depend on, int. al., the nature of the acid, the desired decrease in pH, and the composition of the meat. Determining the exact amount of acid in a particular situation is a matter of routine trial and error which is well within the scope of the skilled person.

The latent acid may be added to the uncooked meat product in solid form or dispersed or dissolved in a liquid medium, e.g., an aqueous liquid medium. The acid may be added simultaneous with the organic acid salts (s) and/or separate therefrom.

In the present invention an organic acid salt is used selected from lactate salts, acetate salts, and combinations thereof. For good order's sake it is noted that as the skilled person will understand acetate salts also encompass diacetate salts. For use in the present invention the salt should be acceptably for use in food compounds, both from a food safety point of view and as regards detrimental influence on the taste of the product.

Preferred salts are alkali metal salts and earth alkali metal salts. Sodium, potassium, and calcium salts should be mentioned in particular.

Where a lactate salt is used, it is generally added in an amount of 0.5-5 wt.%, calculated as salt on the weight of the final meat product. Preferably, the amount used is up to 4 wt.%, in particular up to 3 wt.%, and even up to 2 wt.%. The lower limit generally is 0.5 wt.%. In some cases a lower limit of 1 wt.% may be preferred. Suitable lactate salts are known in the are and include sodium lactate, potassium lactate, and calcium lactate.

Where an acetate salt is used, it generally is an alkali metal acetate or diacetate, in particular sodium diacetate or potassium diacetate or sodium acetate or potassium acetate. It is generally used in an amount of 0.01-0.3 wt.%, calculated as salt on the weight of the final meat product, in particular in an amount of 0.01-0.2 wt.%.

In one embodiment of the present invention, a combination of lactate salt and acetate salt is used. For details on these compounds and the amount in which they are added, reference is made to what has been specified above.

The organic acid salt may be added to the uncooked meat product in solid form or dispersed or dissolved in a liquid medium, in particular dissolved in an aqueous medium. Where more than one compound is used, e.g., in the case of the combination of a lactate salt and an acetate salt as specified above, they may be added separately from each other or in combination, whether or not with the latent acid.

It is noted that it is within the scope of the present invention to use one or more organic acid salts, including one or more lactates and/or one or more acetates, and/or one or more latent acids. Unless indicated otherwise, all weight percentages are calculated on the weight of the final product after cooking.

In one embodiment of the present invention, the organic acid salt and the latent acid are combined and the combination is added to the uncooked meat product. The present invention also pertains to a mixture suitable for use in the manufacture of cooked meat products which comprises an organic acid salt selected from lactate salts, acetate salts, and combinations thereof, and a latent acid, the latent acid being a compound which does not show acidic properties at room temperature but which is converted to a carboxylic acid with at least 3 carbon atoms under the conditions prevailing during the cooking of the meat product.

The mixture may be in solid or in liquid form. If the mixture is in solid form it will generally be in the form of a powder comprising particles of the relevant components. The mixture in solid form generally comprises 10-99 wt.% of organic acid salt, in particular 70-99 wt.%, and 1-70 wt.% of latent acid, in particular 1-30 wt.%. In the embodiment of the invention where the mixture comprises a lactate salt, an acetate salt, and a latent acid, it generally comprises 10-98,5 wt.% of lactate salt, 0.05-40 wt.% of acetate salt, and 1-30 wt.% of latent acid.

If the mixture is in liquid form, it generally is in the form of an aqueous composition, which may be a solution or a dispersion. An aqueous composition according to the invention generally comprises the amounts of organic acid salt(s) and latent acid specified above, combined with 1-1000 parts of water per part of the total of organic acid salt(s) and acid.

Where the mixture is in solid form, the particles of the mixture generally have a diameter of 0.01-5000 microns, preferably 40-2000 micron, especially 50-1500 microns. Where appropriate, a conventional flow aid may be added to the mixture. It is noted that the particle size mentioned above is determined on the mixture not containing the flow aid.

The organic acid salt and the latent acid are added to the uncooked meat product. If one or more of the compounds is added in solid form, it will generally be added in the form of a powder by stirring it through the meat product. Any components added in liquid form can be combined and mixed through the meat product. In the case of pieces of meat, compounds can, e.g., be injected into the meat in aqueous form. To profit from the effects of the invention it is important that the active compounds are present also on the inside of the meat product, and not only on the outside. Adding the compounds by dipping pieces of meat into the solution is therefore generally not an appropriate addition method. Other suitable methods by which the present compounds can be added to the meat product will be evident to meat manufacturers and require no further elucidation here.

After addition of the organic acid salt and the latent acid the meat product is cooked. The cooking of meat products is part of the common general knowledge of the skilled person and requires no further elucidation here. At some point during the cooking process the temperature of the meat product will reach the value at which the latent acid is converted into an active acid.

The meat product can be cured or uncured. Because uncured meat products are more sensitive to the growth of micro-organism than cured meat products, the present invention is particularly attractive for application in uncured meat products. Examples of suitable uncured meat products are cooked chicken, turkey meat, and roast beef. Examples of suitable cured meat products are cured pork ham, frankfurters, and other cured sausages. For good order's sake is noted that in the present specification the word meat also includes poultry and fish.

It should be noted that as the full effect of the present invention is only obtained when the acid is released during the cooking of the meat product, the present invention is particularly attractive for processes wherein the meat product is cooked by meat processors like butchers or the meat processing industry.

The present invention also pertains to a cooked meat product which can be obtained using the method of the present invention.

The present invention is illustrated by the following examples, without in any way being limited thereto or thereby.

### Example 1:

Turkey meat rolls were prepared as follows. Turkey meat was salted with brines containing sodium triphosphate, sodium chloride, maltodextrin, carrageenan, modified corn starch and water. Coated citric acid and/or a combination of potassium lactate and sodium diacetate were added as preservatives. The composition of turkey rolls is given in table 1.

**Table 1: Composition of turkey rolls (in wt.%)**

| **Ingredient** | **1)** | **2)** | **3)** |
|---|---|---|---|
| | **coated citric acid (comparative)** | **potassium lactate + sodium diacetate (comparative)** | **Coated citric acid + potassium lactate + sodium diacetate (invention)** |
| **Water** | 9.79 | 8.71 | 8.29 |
| Sodium triphosphate | 0.42 | 0.42 | 0.42 |
| Ice | 2.27 | 2.27 | 2.27 |
| Salt | 1.90 | 1.90 | 1.90 |
| Maltodextrin | 1.50 | 1.50 | 1.50 |
| potassium lactate | | 1.4 | 1.4 |
| sodium diacetate | | 0.1 | 0.1 |
| Coated citric acid | 0.30 | | 0.30 |
| Carrageenan | 0.70 | 0.70 | 0.70 |
| Modified corn starch | 3.00 | 3.00 | 3.00 |
| | | | |

| **Meat** | | | |
|---|---|---|---|
| Minced turkey breast | 80.00 | 80.00 | 80.00 |
| **TOTAL** | **100.00** | **100.00** | **100.00** |

| | | | |
|---|---|---|---|
| * coated citric acid is obtained commercially as 72 wt.% citric acid from Karmat. The percentage given is calculated as 100 wit.% citric acid. | | | |

The rolls were prepared as follows: The ground turkey breast meat was stored during one day at. 0°C. The ingredients and preservatives were dissolved in a brine. The brine was added to the ground turkey breast. The turkey breast with brine was packed in vacuum bags (no vacuum) and tumbled 2 times 2 hours with 30 minutes rest in between. The meat-paste was stored during 16 hours at 0 °C in a vacuum bag (for brine distribution). Turkey rolls with an average diameter of 5-5.5 cm were prepared. The turkey rolls were cooked during about 1.75 hours in a water bath at 82 °C, and subsequently chilled in cold water. The final turkey rolls were stored at 0 °C.

The pH and yield of the cooked turkey rolls was determined. Based on visual inspection (no purge), all rolls had a yield of 100%. The rolls prepared using coated citric acid had a pH of 5.8; the rolls prepared in the absence of coated citric acid had a pH of 6.2.

The rolls were evaluated for microbiological resistance.

In a first step an inoculum was prepared as follows: Cultures of *Liberia monocytogenes* (culture collection numbers NRRL B33028, NRRL B33039, NCTC 12480, NCIMB 13449, LMG 23193) are started from plate and incubated overnight at 30 °C in screw-capped tubes (100 x 16 mm) containing 1.0 ml brain heart infusion broth.

Ground cooked turkey rolls were inoculated in duplicate to a final level of about 1000 (103) CFU per g product. The ground turkey roll was inoculated with 1% Inoculum (approximately 5ml Inoculum per 500 gram ground meat) . The ground meat was weighed into bag filters, vacuum sealed (Turbovac, vacuum time: 6, gas time:0, seal time:2) and stored at 7°C.

At appropriate time intervals, samples of inoculated ground turkey roll of each batch are taken in duplicate for microbiological analyses. A sealing bag with sample was opened and 3 times diluted with sterile dilution fluid (8.5 % (w/w) NaCl and 0.1 % (w/v) bacteriological peptone).

The mix was homogenized for 1 min. in a Stomacher. Additional dilutions were made also in sterile dilution fluid.

50 µl of the homogenate or dilution was subsequently plated on Palcam agar using an Eddyjet type 1.23 spiral plater (IUL Instruments, Barcelona, Spain). Plates were incubated for 48 hours at 30°C or 72 hours at room temperature. Homogenization and subsequent plating was carried out in duplicate.

During the inoculation study samples were also analysed on total aerobic plate count to check the meat samples on possible infection by other aerobic bacteria during storage. A suitable dilution of the sample was plated on Tryptone soya agar plates. The colonies were counted with the Colyte Supercount automatic colony counter (Synoptics, Cambridge, UK) using the Synoptics software package. The inoculation study is free of infection by other aerobic bacteria, as the total aerobic plate count results are equal to the *Listeria* count results.

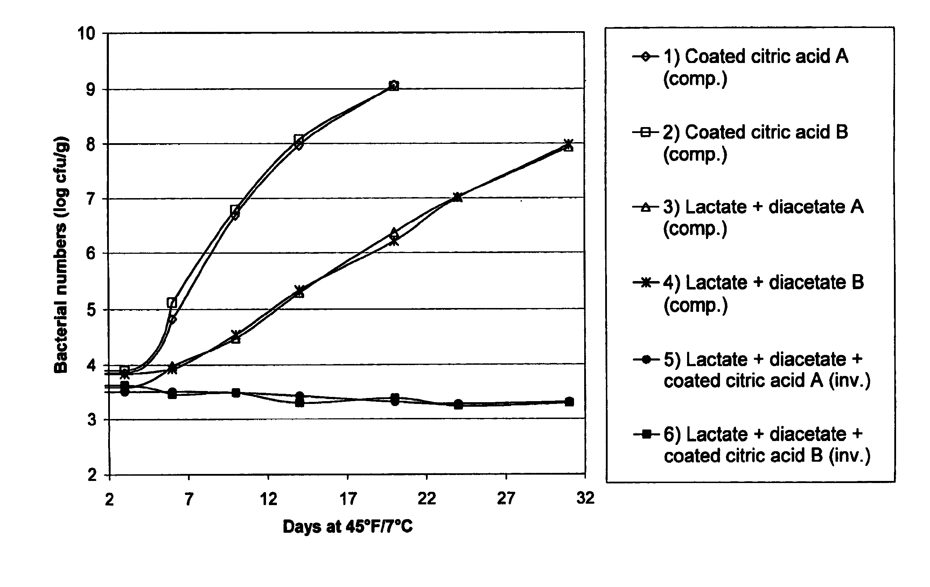

The results of the test are given in Figure 1. Figure 1 shows that the composition according to the invention, prepared using the combination of coated citric acid as latent acid and potassium lactate and sodium diacetate, controls *Listeria monocytogenes* during at least 30 days at 7°C storage temperature. Neither the use of coated acid alone, nor the use of the combination of potassium lactate potassium lactate and sodium diacetate alone gives such good results. This illustrates the advantageous effects associated with the present invention.

### Example 2:

To illustrate the effect of various latent acids in the present invention, meat sausages were prepared using, in addition to potassium lactate and sodium diacetate, glucono-delta-lactone (GDL), lactide, and coated citric acid. As comparative Examples compositions were prepared containing equivalent amounts of gluconic acid, which is the hydrolysis product of GDL, and lactic acid, which is the hydrolysis product of lactide.

The sausages were prepared as follows: Sausages of 550-650 g were prepared. Pork belly, pork backfat and beef shoulder clod were salted with sodium triphosphate, sodium chloride, sodium nitrite, dextrose, spices, sodium ascorbate, sodium glutamate, wheat starch and water. In addition, potassium lactate, sodium diacetate, GDL, gluconic acid, lactide, lactic acid or coated citric acid were added as ingredient The composition of the mixture is given in table 2:

**Table 1: Composition of the sausages (in %)**

| **Ingredient** | **1)** | **2)** | **3)** | **4)** | **5)** |
|---|---|---|---|---|---|
| | **1.07% GDL** | **1.18% gluconic acid (comparative)** | **0.69% lactide** | **0.77% lactic acid (comparative)** | **0.75% coated citric acid (72%) (0.54% acid)** |
| Water | 7.80 | 3.90 | 8.18 | 8.10 | 8.12 |
| Cure salt 0.6% | 1.80 | 1.80 | 1.80 | 1.80 | 1.80 |
| Dextrose | 0.40 | 0.40 | 0.40 | 0.40 | 0.40 |
| Sodium triphosphate | 0.38 | 0.38 | 0.38 | 0.38 | 0.38 |
| Spices | 0.35 | 0.35 | 0.35 | 0.35 | 0.35 |
| Sodium ascorbate | 0.05 | 0.05 | 0.05 | 0.05 | 0.05 |
| Sodium glutamate | 0.05 | 0.05 | 0.05 | 0.05 | 0.05 |
| Wheat starch | 1.00 | 1.00 | 1.00 | 1.00 | 1.00 |
| potassium lactate | 1.4 | 1.4 | 1.4 | 1.4 | 1.4 |
| sodium diacetate | 0.1 | 0.1 | 0.1 | 0.1 | 0.1 |
| GDL | 1.07 | | | | |
| Gluconic acid | | 4.97 | | | |
| Lactide | | | 0.69 | | |
| Lactic acid (99.5%) | | | | 0.77 | |
| | | | | | 0.75 |

| **Meat** | | | | | |
|---|---|---|---|---|---|
| Beef (20% fat) | 6.80 | 6.80 | 6.80 | 6.80 | 6.80 |
| Lean Pork (8% fat) | 6.80 | 6.80 | 6.80 | 6.80 | 6.80 |
| Bacon (30% fat) | 71.00 | 71.00 | 71.00 | 71.00 | 71.00 |
| **TOTAL** | **100.00** | **100.00** | **100.00** | **100.00** | **100.00** |

It is noted that 1.0% GDL corresponds to 1.18% gluconic acid and 0.69% lactide corresponds to 0.77% lactic acid. Thus the comparative samples contain the same amount of acid as the samples according to the invention.

The sausages were prepared using the following procedure: The meat was stored for one day at -4°C. The lean meat and non-meat protein (ground beef, lean pork and part of pork belly) was chopped in a bowl chopper with cure salt 0.6%, sodium triphosphate and half of the water until a temperature of -2°C is reached. The remaining dry ingredients and pork belly (and water) are added, and the mixture is chopped at high speed until a temperature of 15-16°C is reached. The emulsion is stuffed into the casing, the sausages are cooked directly in water bath at 82°C for 1.75 hours, and chilled in cold water.

The sausages were evaluated for texture and yield. The results are given in Tables 3 and 4:

**Table 3: Moisture/Loss of drying, pH, and yield**

| **ADDITIONS** | **Meat paste** | **PRODUCT** | | | | |
|---|---|---|---|---|---|---|
| | pH | LOD theoretically (% w/w) | LOD measured (% w/w) | Yield (%) | pH after 2 days | pH after 12 days |
| 1.07% GDL | 5.77 | 56.2 | 58.7 | 100.0% | 5.30 | 5.37 |
| 1.18% gluconic acid (comp.) | 5.13 | 56.5 | | 86.0% | 5.40 | 5.40 |
| 0.69% lactide | 5.79 | 56.5 | 60.5 | 100.0% | 5.42 | 5.37 |
| 0.77% lactic acid (comp.) | 4.76 | 56.5 | | 76.0% | 4.97 | 5.08 |
| 0.75% coated citric acid (72%) (0.54% acid) | 5.79 | 56.5 | 61.5 | 100.0% | 5.05 | 5.18 |

**Table 4: Meat texture**

| **ADDITIONS** | **Texture** | |
|---|---|---|
| | Meat paste | Sausage after cooking |
| 1.07% GDL | Sticky, consistent meat paste | Typical sausage structure |
| 1.18% gluconic acid (comp) | Not sticky, inconsistent meat paste | Wet Meat clod with purge |
| 0.69% lactide | Sticky, consistent meat paste | Typical sausage structure |
| 0.77% lactic acid (comp) | Not sticky, inconsistent meat paste | Wet Meat clod with purge |
| 0.75% coated citric acid (72%) (0.54% acid) | Sticky, consistent meat paste | Typical sausage structure |

Sausages containing latent acids as GDL, lactide or coated citric acid have a significant better meat structure than sausages with gluconic acid and lactic acid, and showed no yield loss after cooking.

## Claims

1. A process for manufacturing a cooked meat product comprising combining an uncooked meat product with an organic acid salt and a latent acid, followed by cooking the meat product, the latent acid being a compound which does not show acidic properties when it is added to the uncooked meat product, but which is converted to a carboxylic acid with at least 3 carbon atoms under the conditions prevailing during the cooking of the meat product, the organic acid salt being selected from lactate salts, acetate salts, and combinations thereof.

2. The process of claim 1 wherein the cooked meat product is an uncured meat product.

3. The process of claim 1 or 2 wherein the organic acid salt is a combination of a lactate salt and an acetate salt.

4. The process of any one of the preceding claims wherein the lactate salt comprises an alkali metal lactate selected from sodium lactate, potassium lactate, and mixtures thereof, and the acetate salt comprises an alkali metal acetate selected from sodium acetate, sodium diacetate, potassium acetate, potassium diacetate, and mixtures thereof.

5. The process of any one of the preceding claims wherein the latent acid is a coated acid, a lactic acid oligomer, or a lactone.

6. The process of claim 5 wherein the latent acid is glucono-delta-lactone or lactide.

7. A mixture suitable for use in the manufacture of cooked meat products which comprises an organic acid salt and a latent acid, the latent acid being a compound which does not show acidic properties at room temperature but which is converted to a carboxylic acid with at least 3 carbon atoms under the conditions prevailing during the cooking of meat products, the organic acid salt being selected from lactate salts, acetate salts, and combinations thereof.

8. The mixture on claim 7, wherein the organic acid salt comprises a combination of a lactate salt and an acetate salt.

9. Use of the combination of an organic acid and a latent acid in increasing the resistance of a meat product against the growth of *Listeria monocytogenes* by combining the uncooked meat product with an organic acid salt and a latent acid, followed by cooking the meat product, the latent acid being a compound which does not show acidic properties when it is added to the uncooked meat product, but which is converted to a carboxylic acid with at least 3 carbon atoms under the conditions prevailing during the cooking of the meat product, the organic acid salt being selected from lactate salts, acetate salts, and combinations thereof.

10. Use according to claim 9, wherein the organic acid salt comprises a combination of a lactate salt and an acetate salt.

11. Use according to claim 9 or 10 wherein the latent acid is a coated acid, a lactic acid oligomer, or a lactone.

12. Use according to any one of claims 9-11, wherein organic acid salt and the latent acid are added in the form of the mixture of claim 7 or 8.

13. A cooked meat product obtainable by the method of any one of claims 1-6, or the use of any one of claims 9-12.

## Patentansprüche

1. Ein Verfahren zur Herstellung eines gekochten Fleischprodukts, umfassend Kombinieren eines ungekochten Fleischprodukts mit einem Salz einer organischen Säure und einer latenten Säure, gefolgt von Kochen des Fleischprodukts, wobei die latente Säure eine Verbindung ist, welche keine sauren Eigenschaften aufweist, wenn sie dem ungekochten Fleischprodukt zugegeben wird, welche jedoch unter den Bedingungen, die während des Kochens des Fleischprodukts vorherrschen, in eine Carbonsäure mit mindestens 3 Kohlenstoffatomen umgewandelt wird, wobei das Salz der organischen Säure ausgewählt ist aus Lactatsalzen, Acetatsalzen und Kombinationen davon.

2. Das Verfahren gemäß Anspruch 1, wobei das gekochte Fleischprodukt ein ungepökeltes Fleischprodukt ist.

3. Das Verfahren gemäß Anspruch 1 oder 2, wobei das Salz der organischen Säure eine Kombination aus einem Lactatsalz und einem Acetatsalz ist.

4. Das Verfahren gemäß einem der vorherigen Ansprüche, wobei das Lactatsalz ein Alkalimetalllactat, ausgewählt aus Natriumlactat, Kaliumlactat und Gemischen davon, umfasst und das Acetatsalz ein Alkalimetallacetat, ausgewählt aus Natriumacetat, Natriumdiacetat, Kaliumacetat, Kaliumdiacetat und Gemischen davon, umfasst.

5. Das Verfahren gemäß einem der vorherigen Ansprüche, wobei die latente Säure eine beschichtete Säure, ein Milchsäureoligomer oder ein Lacton ist.

6. Das Verfahren gemäß Anspruch 5, wobei die latente Säure ein Glucono-delta-lacton oder Lactid ist.

7. Ein Gemisch, das zur Verwendung in der Herstellung von gekochten Fleischprodukten geeignet ist, welches ein Salz einer organischen Säure und eine latente Säure umfasst, wobei die latente Säure eine Verbindung ist, die keine sauren Eigenschaften bei Raumtemperatur aufweist, die jedoch unter den Bedingungen, die während des Kochens von Fleischprodukten vorherrschen, zu einer Carbonsäure mit mindestens 3 Kohlenstoffatomen umgewandelt wird, wobei das Salz der organischen Säure ausgewählt ist aus Lactatsalzen, Acetatsalzen und Kombinationen davon.

8. Das Gemisch gemäß Anspruch 7, wobei das Salz der organischen Säure eine Kombination aus einem Lactatsalz und einem Acetatsalz umfasst.

9. Verwendung der Kombination einer organischen Säure und einer latenten Säure zum Erhöhen der Beständigkeit eines Fleischprodukts gegen das Wachstum von *Listeria monocytogenes* durch Kombinieren des ungekochten Fleischprodukts mit einem Salz einer organischen Säure und einer latenten Säure, gefolgt von Kochen des Fleischprodukts, wobei die latente Säure eine Verbindung ist, die keine sauren Eigenschaften aufweist, wenn sie dem ungekochten Fleischprodukt zugegeben wird, die jedoch unter den Bedingungen, die während des Kochens des Fleischprodukts vorherrschen, zu einer Carbonsäure mit mindestens 3 Kohlenstoffatomen umgewandelt wird, wobei das Salz der organischen Säure ausgewählt ist aus Lactatsalzen, Acetatsalzen und Kombinationen davon.

10. Verwendung gemäß Anspruch 9, wobei das Salz der organischen Säure eine Kombination aus einem Lactatsalz und einem Acetatsalz umfasst.

11. Verwendung gemäß Anspruch 9 oder 10, wobei die latente Säure eine beschichtete Säure, ein Milchsäureoligomer oder ein Lacton ist.

12. Verwendung gemäß einem der Ansprüche 9 bis 11, wobei das Salz der organischen Säure und die latente Säure in der Form des Gemisches gemäß Anspruch 7 oder 8 zugegeben werden.

13. Ein gekochtes Fleischprodukt, erhältlich durch das Verfahren gemäß einem der Ansprüche 1 bis 6 oder durch die Verwendung gemäß einem der Ansprüche 9 bis 12.

## Revendications

1. Processus de fabrication d'un produit carné cuit comprenant la combinaison d'un produit carné non cuit avec un sel d'acide organique et un acide latent, suivie de la cuisson du produit carné, l'acide latent étant un composé qui ne présente pas des propriétés acides lorsqu'il est ajouté au produit carné non cuit, mais qui est converti en un acide carboxylique ayant au moins 3 atomes de carbone, dans les conditions qui règnent pendant la cuisson du produit carné, le sel d'acide organique étant choisi parmi les sels de lactate, les sels d'acétate, et leurs combinaisons.

2. Processus de la revendication 1, dans lequel le produit carné cuit est un produit carné non saumuré.

3. Processus de la revendication 1 ou 2, dans lequel le sel d'acide organique est une combinaison d'un sel de lactate et d'un sel d'acétate.

4. Processus de l'une quelconque des revendications précédentes, dans lequel le sel de lactate comprend un lactate de métal alcalin choisi parmi le lactate de sodium, le lactate de potassium, et leurs mélanges, et le sel d'acétate comprend un acétate de métal alcalin choisi parmi l'acétate de sodium, le diacétate de sodium, l'acétate de potassium, le diacétate de potassium, et leurs mélanges.

5. Processus de l'une quelconque des revendications précédentes, dans lequel l'acide latent est un acide enrobé, un oligomère d'acide lactique, ou une lactone.

6. Processus de la revendication 5, dans lequel l'acide latent est la glucono-delta-lactone ou le lactide.

7. Mélange convenant à une utilisation dans la fabrication de produits carnés cuits qui comprend un sel d'acide organique et un acide latent, l'acide latent étant un composé qui ne présente pas de propriétés acides à température ambiante mais qui est converti en un acide carboxylique ayant au moins 3 atomes de carbone dans les conditions qui règnent pendant la cuisson des produits carnés, le sel d'acide organique étant choisi parmi les sels de lactate, les sels d'acétate et leurs combinaisons.

8. Mélange de la revendication 7, dans lequel le sel d'acide organique comprend une combinaison d'un sel de lactate et d'un sel d'acétate.

9. Utilisation de la combinaison d'un acide organique et d'un acide latent dans l'augmentation de la résistance d'un produit carné à la croissance de Listeria monocytogenes par combinaison du produit carné non cuit avec un sel d'acide organique et un acide latent, suivie de la cuisson du produit carné, l'acide latent étant un composé qui ne présente pas de propriétés acides lorsqu'il est ajouté au produit carné non cuit, mais qui est converti en un acide carboxylique ayant au moins 3 atomes de carbone dans les conditions qui règnent pendant la cuisson du produit carné, le sel d'acide organique étant choisi parmi les sels de lactate, les sels d'acétate, et leurs combinaisons.

10. Utilisation selon la revendication 9, dans laquelle le sel d'acide organique comprend une combinaison d'un sel de lactate et d'un sel d'acétate.

11. Utilisation selon la revendication 9 ou 10, dans laquelle l'acide latent est un acide enrobé, un oligomère d'acide lactique, ou une lactone.

12. Utilisation selon l'une quelconque des revendications 9 à 11, dans laquelle le sel d'acide organique et l'acide latent sont ajoutés sous la forme du mélange de la revendication 7 ou 8.

13. Produit carné cuit pouvant être obtenu par le procédé de l'une quelconque des revendications 1 à 6, ou l'utilisation de l'une quelconque des revendications 9 à 12.
